# EUROPÄISCHE PATENTSCHRIFT

(11) **EP 0 703 129 B1**
(45) Veröffentlichungstag und Bekanntmachung des Hinweises auf die Patenterteilung: **15.12.1999**
(21) Anmeldenummer: 95111046.9
(22) Anmeldetag: 14.07.1995
(51) Int. Cl.: B60S 1/34, F16D 1/06

(54) **Vorrichtung zum Befestigen eines Wischerarms**
Attachment device for a wiper arm
Dispositif de fixation d'un bras d'essuie-glace

(30) Priorität: 11.08.1994 DE 4428371
(43) Veröffentlichungstag der Anmeldung: 27.03.1996
(73) Patentinhaber: ROBERT BOSCH GMBH, 70442 Stuttgart (DE)
(72) Erfinder: Zimmer, Joachim, Dipl.-Ing., D-77880 Sasbach (DE)

(56) Entgegenhaltungen:
- EP-A- 0 669 237
- FR-A- 1 240 501
- GB-A- 882 303
- US-A- 3 085 821
- US-A- 3 429 597

## Beschreibung

### Stand der Technik

Die Erfindung betrifft eine Vorrichtung zum Befestigen eines Wischerarms nach der Gattung des Hauptanspruchs. Bei bekannten Vorrichtungen weist das den Wischerarm aufnehmende Wellenende einen Außenkonus auf, auf den der Wischerarm mit einem passenden Innenkonus aufgedrückt und mittels einer Mutter festgeklemmt wird. Bei dieser Art der Verbindung können sich Fertigungstoleranzen ungünstig addieren, so daß eine genaue Position des Wischerarms relativ zur Welle nur sehr schwer gewährleistet werden kann. Ferner sind erhöhte Anforderungen an das Anzugsmoment der Schraube zu stellen, wobei die Höhe des Anzugsmoments ebenfalls Auswirkungen auf die relative Lage des Wischerarms hat.

Mit der US-PS 3,085,821 ist eine gattungsgemäße Besfestigung für einen Wischerarm bekannt geworden, bei dem das den Wischerarm aufnehmende Ende der Wischerwelle eine Riffelung aufweist, über die mittels eines Elements die Wischbewegung auf den Wischarm übertragen wird. Der Wischarm wird durch das Element auf eine Anschlagschulter gepreßt, die an einer die Wischerwelle umgebenden Hülse angeordnet ist. Die Wischerwelle weist eine Nut auf, in die ein den Anschlag bildender Springring eingreift.

### Vorteile der Erfindung

Die erfindungsgemäße Vorrichtung mit den Merkmalen des Hauptanspruchs hat den Vorteil, daß die Fertigungstoleranzen die Positioniergenauigkeit nur in geringem Maße beeinflussen, und daß der Wischerarm mit einem hohen Anzugsmoment befestigt werden kann, ohne daß das Anzugsmoment auf die Positioniergenauigkeit Einfluß nimmt. Durch die geringeren Anforderungen an die Genauigkeit des Anzugsmoments ist eine günstige und schnelle Montage möglich und durch Einlegen einer Scheibe, die sich an der Schulter abstützt, eine gute Druckverteilung im Bereich der Wischerarmnabe erreicht. Mit einem der Länge nach geschlitzten Befestigungselement lassen sich Toleranzen in vorteilhafter Weise ausgleichen.

Durch die in den Unteransprüchen aufgeführten Merkmale sind weitere, vorteilhafte Ausgestaltungen der Vorrichtung nach dem Hauptanspruch möglich. Ein hohes Drehmoment ist übertragbar, wenn das Befestigungselement im Bereich des Außenkonus' einen von der Kreissymmetrie abweichenden Querschnitt, insbesondere einen Sechskant aufweist.

### Zeichnung

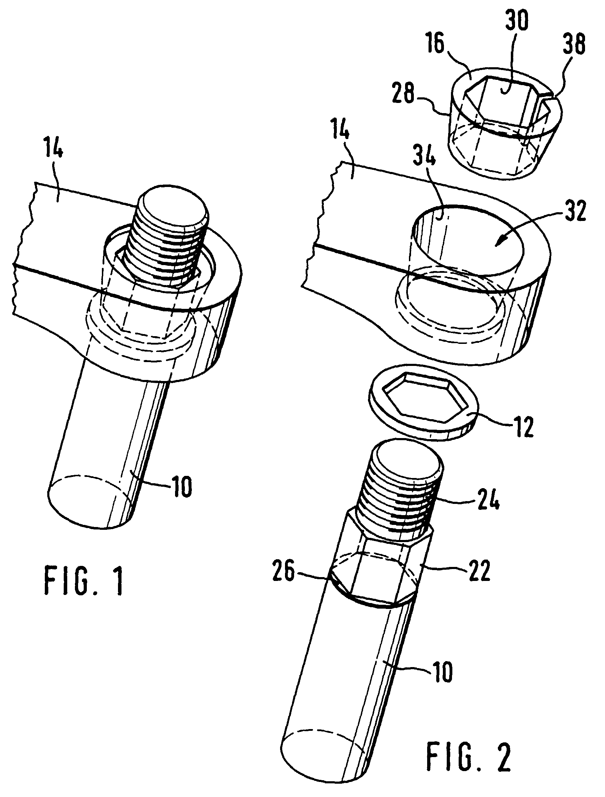

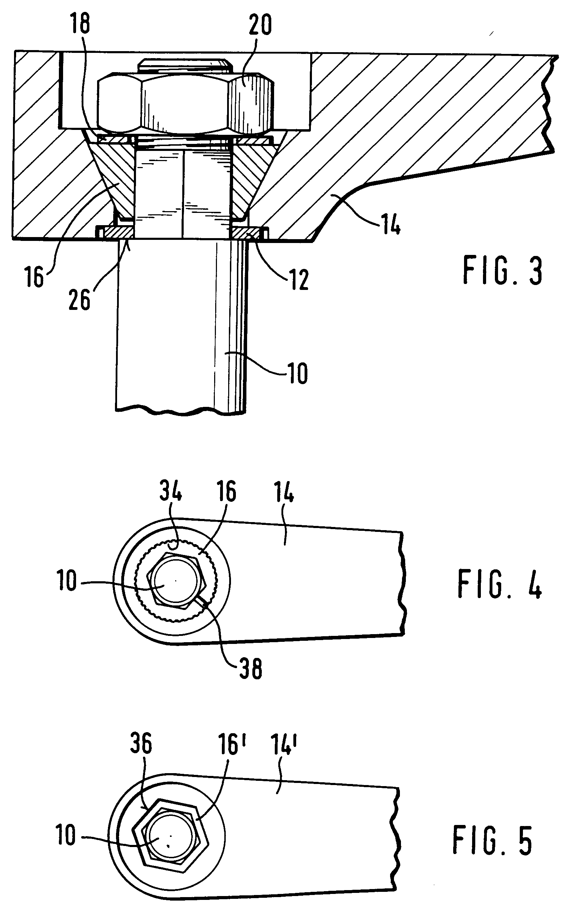

In der Zeichnung sind zwei Ausführungsbeispiele der erfindungsgemäßen Vorrichtung gezeigt und in der nachfolgenden Beschreibung näher erläutert. Es zeigen Figur 1 eine Vorrichtung in Schrägdarstellung, Figur 2 die Vorrichtung nach Figur 1 in Explosionsdarstellung, Figur 3 die Vorrichtung in vergrößertem Maßstab im Schnitt, Figur 4 eine Ansicht von oben der Vorrichtung nach Figur 3 in verkleinertem Maßstab und Figur 5 eine Ansicht analog zu Figur 4 einer weiteren Ausführungsform.

### Beschreibung

In einem ersten Ausführungsbeispiel (Figuren 1 bis 4) weist die erfindungsgemäße Vorrichtung eine Welle 10, eine Scheibe 12, einen Wischerarm 14, ein Befestigungselement 16 sowie eine Unterlegscheibe 18 und eine Mutter 20 auf (Figur 3). In den Figuren 1, 2, 4 und 5 sind der besseren Darstellung wegen die Unterlagscheibe 18 und die Mutter 20 nicht gezeichnet. Die Welle 10 besitzt einen vom kreisrunden Querschnitt abweichenden Bereich in Form eines Sechskants 22 und ein daran anschließendes Außengewinde 24. Zwischen dem Sechskant 22 und dem Schaft der Welle 10 ist eine Schulter 26 angeformt.

Das Befestigungselement 16 ist kegelstumpfförmig ausgebildet und besitzt einen Außenkonus 28 sowie eine Durchgangsöffnung 30 in der Form des Sechskants 22.

In Zusammenbaustellung liegt der Wischerarm 14 auf der Scheibe 12 auf, die sich ihrerseits an der Schulter 26 abstützt. In eine Durchgangsöffnung 32 des Wischerarms 14 ist das Befestigungselement passend eingefügt. Dazu weist der Wischerarm 14 einen Innenkonus 34 auf, an den sich der Außenkonus 28 anlegt. Mittels der Mutter 20 wird das Befestigungselement 16 mit seinem Außenkonus 28 gegen den Innenkonus 34 und damit der Wischerarm 14 gegen die Scheibe 12 gepreßt, so daß ein fester Halteverbund entsteht.

Die während des Betriebs des Wischersystems von der Welle 10 ausgehenden Drehbewegung wird über den Sechskant 22 formschlüssig auf das Befestigungselement 16 und von dort über die aufeinandergepreßten Innen-Außenkonus' 34, 28 kraftschlüssig auf den Wischerarm 14 übertragen.

Zur Verbesserung der Übertragung des Drehmoments im Bereich des Außenkonus' 28 beziehungsweise Innenkonus' 34 können deren Mantelflächen aufgerauht, gerändelt oder eine andere Struktur aufweisend ausgebildet sein (Figur 4).

Es ist auch möglich, entsprechend dem zweiten Ausführungsbeispiel (Figur 5) das Befestigungselement 16' mit einem von der Kreissymmetrie abweichenden Außenkonus zu versehen, so daß, wenn der Innenkonus des Wischerarms 14' die gleiche Gestalt aufweist, eine vollkommen formschlüssige Drehmomentübertragung von der Welle 10 auf den Wischerarm 14' erfolgt.

Die von der Kreissymmetrie abweichenden Querschnitte sind in den Ausführungsbeispielen jeweils als Sechskante aufgezeigt. Es ist jedoch auch möglich, hier andere Profilarten wie mehrflächige, sternförmige, exzentrische oder polygonartige Profile vorzusehen. Je nach dem, welches Profil gewählt wird, kann auf eine Scheibe 12 verzichtet werden, wenn entsprechend große Schultern 26 gebildet sind.

Anstatt der Mutter 20 können auch andere bekannte lösbare Befestigungselemente Verwendung finden, wie beispielsweise axial oder quer im Wischerarm eingesetzte Schrauben, quereingeführte keilförmige Stifte oder dergleichen mehr.

Das Befestigungselement 16 weist einen Schlitz 38 auf, der es beim Zusammenbau ermöglicht, daß sich das Befestigungselement 16 bei auftretenden Fertigungstoleranzen mit dem Außenkonus 28 formgenau an den Innenkonus 34 anlegt und/oder Fertigungstoleranzen zwischen den von der Kreissymmetrie abweichenden Querschnitte (Sechskant 22) ausgleicht.

## Patentansprüche

1. Vorrichtung zum Befestigen eines Wischerarms auf einer den Wischerarm antreibenden Welle (10), die zumindest bereichsweise einen von der Kreissymmetrie abweichenden Querschnitt (22) und eine Schulter (26) aufweist, wobei zwischen die Welle (10) und den Wischerarm (14) ein Befestigungselement (16) eingelegt ist, das die Welle (10) im Bereich des besagten Querschnitts (22) formschlüssig umgreift, wobei ferner das Befestigungselement (16) einen Außenkonus (28) und der Wischerarm (14) einen Innenkonus (34) aufweisen, die in Zusammenbaustellung miteinander korrespondieren und wobei das Befestigungselement (16) und der Wischerarm (14) durch ein lösbares Element (20) auf der Welle (10) so fixiert ist, daß sich der Wischerarm (14) an der Anlageschulter (26) abstützt, dadurch gekennzeichnet, daß zwischen der Schulter (26) und dem Befestigungselement (16) eine Scheibe (12) eingelegt ist, die eine dem von der Kreissymmetrie abweichenden Querschnitt (22) entsprechende Öffnung aufweist und als Anschlag für den Wischerarm (14) dient und daß das Befestigungselement (16) der Länge nach geschlitzt ist.

2. Vorrichtung zum Befestigen eines Wischerarms auf einer den Wischerarm antreibenden Welle nach dem Oberbegriff des Anspruchs 1, dadurch gekennzeichnet, daß zwischen der Schulter (26) und dem Befestigungselement (16) eine Scheibe (12) eingelegt ist, die eine dem von der Kreissymmetrie abweichenden Querschnitt (22) entsprechende Öffnung aufweist und als Anschlag für den Wischerarm (16) dient und daß der von der Kreissymmetrie abweichende Querschnitt die Form eines Sechskants (22) aufweist.

3. Vorrichtung nach Anspruch 2, dadurch gekennzeichnet, daß das Befestigungselement (16) der Länge nach geschlitzt ist.

4. Vorrichtung nach einem der Ansprüche 2 oder 3, dadurch gekennzeichnet, daß das Befestigungselement (16) im Bereich des Außenkonus' (36) einen von der Kreissymmetrie abweichenden Querschnitt aufweist.

## Claims

1. Device for attaching a wiper arm on a shaft (10) which drives the wiper arm and at least in some regions has a cross section (22) which deviates from the circular symmetry and a shoulder (26), an attachment element (16), which fits around the shaft (10) in the region of the said cross section (22) in a form-fitting manner, being inserted between the shaft (10) and the wiper arm (14), the attachment element (16) furthermore having an outer cone (28) and the wiper arm (14) an inner cone (34), which cones correspond to each other in the assembled position, and the attachment element (16) and the wiper arm (14) being fixed by a detachable element (20) on the shaft (10) in such a manner that the wiper arm (14) is supported against the bearing shoulder (26), characterized in that a washer (12) is inserted between the shoulder (26) and the fastening element (16), which washer has an opening, which corresponds to the cross section (22) which differs from the circular symmetry, and serves as a stop for the wiper arm (14), and in that the attachment element (16) has a slot along its length.

2. Device for attaching a wiper arm on a shaft driving the wiper arm, according to the preamble of Claim 1, characterized in that a washer (12) is inserted between the shoulder (26) and the attachment element (16), which washer has an opening, which corresponds to the cross section (22) which differs from the circular symmetry, and serves as a stop for the wiper arm (14), and in that the cross section which differs from the circular symmetry has the form of a hexagon (22).

3. Device according to Claim 2, characterized in that the attachment element (16) has a slot along its length.

4. Device according to either of Claims 2 or 3, characterized in that the attachment element (16) has a cross section which differs from the circular symmetry in the region of the outer cone (36).

## Revendications

1. Dispositif servant à fixer un bras d'essuie-glace sur un arbre (10) entraînant le bras d'essuie-glace, arbre qui présente au moins localement une section transversale (22) et un épaulement (26) qui s'écarte de la symétrie circulaire, un élément de fixation (16) étant inséré entre l'arbre (10) et le bras (14) de l'essuie-glace, élément de fixation qui entoure l'arbre (10) dans la zone de ladite section transversale (22) par complémentarité de forme, l'élément de fixation (16) présentant en outre un cône extérieure (28) et le bras de l'essuie-glace (14) un cône intérieure (34) qui se correspondent l'un l'autre en position d'assemblage et l'élément de fixation (16) et le bras (14) de l'essuie-glace étant fixés par un élément amovible (20) sur l'arbre (10) de telle sorte que le bras (14) de l'essuie-glace prenne appui sur l'épaulement d'appui (26),
caractérisé en ce que
• entre l'épaulement (26) et l'élément de fixation (16) est insérée une rondelle (12) qui présente une ouverture correspondant à la section transversale (22) qui s'écarte de la symétrie circulaire et qui sert de butée pour le bras (14) de l'essuie-glace et
• l'élément de fixation (16) est fendu dans le sens de la longueur.

2. Dispositif servant à fixer un bras d'essuie-glace sur un arbre entraînant le bras d'essuie-glace, selon le préambule de la revendication 1,
caractérisé en ce que
• entre l'épaulement (26) et l'élément de fixation (16) est insérée une rondelle (12) qui présente une ouverture correspondant à la section transversale (22) qui s'écarte de la symétrie circulaire et qui sert de butée pour le bras (14) de l'essuie-glace et
• la section transversale qui s'écarte de la symétrie circulaire présente la forme d'un hexagone (22).

3. Dispositif selon la revendication 2,
caractérisé en ce que
l'élément de fixation (16) est fendu dans le sens de la longueur.

4. Dispositif selon l'une des revendications 2 ou 3,
caractérisé en ce que
l'élément de fixation (16) présente dans la zone du cône extérieur (36) une section transversale qui s'écarte de la symétrie circulaire.
